# DEMANDE DE BREVET EUROPEEN

(11) **EP 3 065 133 A1**
(43) Date de publication de la demande: **07.09.2016**
(21) Numéro de dépôt: 15157924.0
(22) Date de dépôt: 06.03.2015
(51) Int. Cl.: G10L 15/32

(54) **Méthode et système pour générer une solution optimisée en reconnaissance vocale**

(71) Demandeur: ZETES Industries S.A., 1130 Bruxelles (BE)
(72) Inventeur: Forster, Jean-Luc, 1380 LASNE (BE)
(74) Mandataire: De Groote, Christophe

(57) **Abrégé**

Méthode pour générer une solution optimisée (105) en reconnaissance vocale et comprenant les étapes suivantes : recevoir une pluralité de résultats (100) de reconnaissance vocale, chacun comprenant un ou plusieurs éléments (113) et chacun étant une transcription d'un message (50) dit par un orateur (40) ; sélectionner, en utilisant une règle de sélection, un ou plusieurs éléments (113) d'un ou plusieurs résultats (100) de ladite pluralité de résultats (100) de reconnaissance vocale; générer ladite solution optimisée (105) à partir de l'au moins un élément (113) sélectionné.

## Description

### Domaine de l'invention

L'invention se rapporte au domaine de la reconnaissance vocale. En particulier et selon un premier aspect, l'invention se rapporte à une méthode pour générer une solution optimisée en reconnaissance vocale. Selon un deuxième aspect, l'invention se rapporte à un système (ou dispositif). Selon un troisième aspect, l'invention se rapporte à un programme. Selon un quatrième aspect, l'invention se rapporte à un support de stockage comprenant des instructions (par exemple : clé usb, disque de type CD-ROM ou DVD).

### État de la technique

Un moteur de reconnaissance vocale permet de fournir, à partir d'un message parlé ou audio, un résultat qui est généralement sous forme d'un texte ou d'un code exploitable par une machine. Un résultat de reconnaissance vocale peut donc être vu comme une transcription d'un message parlé. La reconnaissance vocale est maintenant largement répandue et est jugée très utile. Différentes applications de la reconnaissance vocale sont notamment décrites dans US6,754,629B1.

Un résultat de reconnaissance vocale peut être utilisé par exemple pour entrer une information dans un système informatique, par exemple un numéro d'article ou une instruction quelconque à réaliser. Un résultat de reconnaissance vocale comprend généralement une suite d'éléments, par exemple des mots, séparés par des silences ou par des intervalles de temps ne comprenant pas de mots reconnus par le moteur de reconnaissance vocale. Un tel résultat est caractérisé par un début et une fin et ses éléments sont temporellement arrangés entre ce début et cette fin. Certains éléments d'un résultat de reconnaissance vocale peuvent être valides ou corrects, tandis que d'autres peuvent être invalides ou incorrects. Par exemple, si un orateur dit le mot 'euh', un moteur de reconnaissance vocale peut fournir pour ce mot parlé, le mot 'deux'.

En général, un moteur de reconnaissance vocale fournit, pour un message parlé, plusieurs hypothèses. Dans ce cas, le moteur de reconnaissance vocale fournit aussi en général un score de confiance associé à chaque hypothèse. Un tel score de confiance est généralement déterminé à partir de scores de confiance associés aux différents éléments des hypothèses. Une hypothèse ayant un taux de confiance élevé représente une hypothèse meilleure qu'une hypothèse ayant un faible score de confiance.

A partir de différentes hypothèses fournies par un moteur de reconnaissance vocale, on sélectionne en général celle qui a le score de confiance le plus élevé, en espérant qu'une telle hypothèse à score de confiance élevé comprend le plus grand nombre d'éléments valides ou corrects. Les inventeurs ont trouvé qu'une telle façon de procéder ne fournissait pas toujours les meilleures performances. En particulier, les éléments de l'hypothèse sélectionnée ne sont nécessairement tous valides. D'autre part, le nombre d'éléments valides ou corrects de l'hypothèse sélectionnée sur base de scores de confiance liés aux hypothèses n'est pas toujours satisfaisant. Les inventeurs ont donc cherché à développer une méthode de post-traitement permettant de fournir, à partir d'une pluralité de résultats de reconnaissance vocale, une meilleure solution, c'est-à-dire une solution post-traitée dont les éléments ont plus de chances d'être valides ou corrects.

### Résumé de l'invention

Selon un premier aspect, un des buts de l'invention est de fournir une méthode permettant de fournir une solution dont les éléments ont plus de chances d'être valides. A cette fin, les inventeurs proposent la méthode suivante. Méthode pour générer une solution optimisée en reconnaissance vocale et comprenant les étapes suivantes :
A. recevoir (ou obtenir, lire) une pluralité de résultats de reconnaissance vocale, chacun comprenant un ou plusieurs éléments et chacun étant une solution d'un message dit par un orateur;
B. sélectionner un ou plusieurs éléments appartenant à un ou plusieurs résultats de ladite pluralité de résultats de reconnaissance vocale de l'étape A. en utilisant une règle de sélection;
C. générer ladite solution optimisée à partir de l'au moins un élément sélectionné à l'étape B..

Ainsi, les inventeurs proposent d'utiliser le contenu des différents résultats de la pluralité de résultats pour générer une solution optimisée. Grâce à la règle de sélection de l'étape B., on peut sélectionner un ou plusieurs éléments d'un ou plusieurs desdits résultats qui ont le plus de chance d'être valides, et dans un même temps, ne pas garder un ou plusieurs éléments qui ont des chances d'être invalides. Les inventeurs proposent donc d'exploiter le contenu des différents résultats pour obtenir une solution optimisée. La méthode de l'invention est plus fiable et plus efficace car les éléments de ladite solution optimisée ont plus de chance d'être valides ou corrects.

La méthode de l'invention a d'autres avantages. Elle est facile à mettre en oeuvre et ne nécessite pas des opérations de post-traitement complexes. Elle est également flexible car différentes règles de sélection peuvent être utilisées à l'étape B. en fonction par exemple de l'identité de l'orateur et/ou du type d'éléments des résultats.

Un résultat de reconnaissance vocale est généralement sous forme d'un texte ou d'un code exploitable par une machine. Un élément d'un résultat représente une information du résultat délimitée par deux temps différents le long d'une échelle de temps, t, associée au résultat, et qui n'est pas considérée comme un silence, ou un bruit de fond par exemple. En général, deux éléments d'un résultat de reconnaissance vocale sont séparés par un intervalle de temps pendant lequel le moteur de reconnaissance vocale ne reconnait pas d'élément. De préférence, un élément est un mot. Des exemples de mot sont : un, deux, voiture, parapluie. Selon cette variante préférée, la méthode de l'invention donne encore de meilleurs résultats. Chaque mot est déterminé à partir d'un message dit par un utilisateur par un moteur de reconnaissance vocale utilisant un dictionnaire. Des règles de grammaire permettent éventuellement de réduire le choix de mots possibles parmi un dictionnaire. De préférence, un résultat de reconnaissance vocale est une hypothèse fournie par moteur de reconnaissance vocale.

De préférence, un élément est un mot, par exemple « un », « deux ». Un élément peut aussi représenter un groupe ou une combinaison de mots.

De préférence, les éléments desdits résultats de reconnaissance vocale de l'étape A. appartiennent à un même vocabulaire. Par vocabulaire, on entend un ensemble de mots par exemple. On pourrait aussi utiliser le mot `lexique' à la place du mot 'vocabulaire'. Selon cette variante préférée, les éléments des résultats de l'étape A. sont par exemple des chiffres, des noms communs, des noms propres, des nombres compris entre cent et deux cents, des couleurs. D'autres exemples sont néanmoins possibles.

De préférence, les éléments desdits résultats de reconnaissance vocale de l'étape A. sont des mots. En utilisant cette variante préférée, la méthode de l'invention est encore plus fiable et plus efficace car les éléments de la solution optimisée ont encore plus de chance d'être valides ou corrects.

De préférence, les résultats de reconnaissance vocale de l'étape A. sont chacun une solution d'un même message dit par ledit orateur, fournie par un moteur de reconnaissance vocale. Les résultats de reconnaissance vocale représentent alors en général différentes hypothèses fournies par un moteur de reconnaissance vocale pour ce message. Grâce à cette version préférée, on peut tirer profit du contenu de ces différentes hypothèses pour obtenir une solution optimisée. Une telle variante est particulièrement facile à mettre en oeuvre car elle utilise des résultats qui sont généralement fournis par un moteur de reconnaissance vocale.

Selon une autre variante possible, les résultats de reconnaissance vocale de l'étape A. sont des solutions fournies par un moteur de reconnaissance vocale à partir de différents messages répétés, les différents messages répétés se rapportant à un même contenu mais n'étant pas exactement identiques. Idéalement, ces différents messages répétés sont strictement les mêmes. Mais dans la pratique, un opérateur ne dit jamais plusieurs fois un même contenu de la même façon. En particulier, il peut fourcher ou se tromper pour certains éléments parlés d'un ou plusieurs des messages répétés.

De préférence, chaque résultat de ladite pluralité de résultats de reconnaissance vocale de l'étape A. est caractérisé par un score de confiance supérieur ou égal à un score de confiance minimum. En général, le score de confiance associé à chaque résultat de reconnaissance vocale (chaque hypothèse fournie par un moteur de reconnaissance vocale par exemple) est fourni par un moteur de reconnaissance vocale. Dans ce cas, un score de confiance élevé représente un résultat meilleur qu'un résultat ayant un faible score de confiance. Pour ce mode de réalisation préféré, il y a donc une étape préliminaire de sélectionner un ou plusieurs résultats fournis par un moteur de reconnaissance vocale qui a un score de confiance supérieur ou égal à un score de confiance minimum. Cela a l'avantage d'encore améliorer la fiabilité et l'efficacité de la méthode de l'invention car la solution optimisée est générée à partir de résultats qui ont passé un premier filtre et qui ne sont retenus que si le score de confiance (global) qui leur est associé est jugé suffisant.

De préférence, les résultats de reconnaissance vocale de l'étape A. sont des hypothèses fournies par un moteur de reconnaissance vocale. De préférence, les différentes hypothèses sont obtenues à partir d'un même message dit par un orateur.

Selon une autre variante possible, chaque résultat de ladite pluralité de résultats de reconnaissance vocale de l'étape A. est une solution post-traitée d'un message dit par un orateur. Une telle solution post-traitée est par exemple obtenue en ne gardant que des éléments jugés valides dans une solution fournie par un moteur de reconnaissance vocale à partir d'un message dit par un orateur. De préférence, une telle solution post-traitée est obtenue en ne gardant que des éléments valides consécutifs d'une solution fournie par un moteur de reconnaissance vocale à partir d'un message dit par un orateur, de préférence en partant de la fin de ladite solution. Un exemple de solution est une hypothèse fournie par un moteur de reconnaissance vocale.

La règle de sélection de l'étape B. peut comprendre différentes étapes qui en outre peuvent être combinées. De préférence, ladite règle de sélection de l'étape B. comprend une étape de sélectionner un élément s'il est identique à au moins deux résultats de ladite pluralité de résultats de l'étape A. et s'il est compris, dans une marge d'erreurs près, dans un même intervalle temporel, le long d'une échelle de temps, t, associée à chacun desdits deux résultats. Grâce à cette variante préférée, il est possible d'utiliser une éventuelle redondance d'un ou plusieurs éléments dans plusieurs résultats comme critère de sélection. On optimise donc les informations fournies par les différents résultats. Par exemple, on sélectionnerait le mot 'trois' qui se trouverait à plus ou moins le même endroit temporel dans trois résultats.
Chaque résultat a un début et une fin. Les différents éléments d'un résultat sont répartis entre ce début et cette fin. Un élément représente une information d'un résultat délimitée par deux temps différents le long d'une échelle de temps, t, associée au résultat. De préférence, la marge d'erreur près signifie que le début et la fin de l'élément, qui est commun au moins deux résultats, sont les mêmes à 20% près (de manière encore préférée à 10% près), la référence pour calculer le pourcentage étant une valeur soit du début et soit de la fin d'un tel élément dans un résultat.
De préférence, il faut en plus qu'un élément ait un taux de confiance supérieur ou égal à un taux de confiance minimum pour qu'il soit sélectionné.

De préférence, ladite règle de sélection de l'étape B. comprend une étape de sélectionner un élément si sa durée est supérieure ou égale à un seuil de durée inférieur. A chaque élément d'un résultat correspond une durée ou intervalle temporel qui est en général fourni par le moteur de reconnaissance vocale. Avec ce mode de réalisation préféré, il est possible de s'affranchir plus efficacement des éléments qui sont de courte durée, comme par exemple un bruit parasite qui peut être issu d'une machine.

De préférence, ladite règle de sélection de l'étape B. comprend une étape de sélectionner un élément si sa durée est inférieure ou égale à un seuil de durée supérieur. Avec ce mode de réalisation préféré, il est possible de s'affranchir plus efficacement des éléments qui sont de longue durée, comme par exemple une hésitation d'un orateur qui dit par exemple 'euh' mais pour lequel le moteur de reconnaissance vocale fournit le mot 'deux'. En utilisant ce mode de réalisation préféré, on pourra plus facilement éliminer (ne pas sélectionner) ce mot 'deux' invalide.

De préférence, chaque élément desdits résultats de l'étape A. est caractérisé par un taux de confiance et ladite règle de sélection de l'étape B. comprend une étape de sélectionner un élément si son taux de confiance est supérieur ou égal à un taux de confiance minimal. La fiabilité de la méthode de l'invention est encore accrue dans ce cas-là. La notion de 'taux de confiance' est connue d'un homme du métier. Il s'agit d'une propriété ou statistique associée à un élément et qui peut être fournie par un moteur de reconnaissance vocale en général. Un taux de confiance représente, en général, une probabilité qu'un élément déterminé par un moteur de reconnaissance vocale à partir d'un élément parlé, est le bon. Un exemple de moteur de reconnaissance vocale est le modèle VoCon® 3200 V3.14 de Nuance. Dans ce cas, le taux de confiance varie entre 0 et 10 000. Une valeur de 0 se rapporte à une valeur minimale d'un taux de confiance (très faible probabilité que l'élément du résultat de reconnaissance vocale soit le bon) et 10 0000 représente une valeur maximale d'un taux de confiance (très grande probabilité que l'élément du résultat de reconnaissance vocale soit le bon).

De préférence :
- chaque élément desdits résultats de l'étape A. est caractérisé par un taux de confiance, et
- ladite règle de sélection de l'étape B. comprend une étape de sélectionner un élément d'un résultat si son taux de confiance est supérieur ou égal au taux de confiance d'un ou plusieurs autres éléments d'un ou plusieurs autres résultats et compris, dans une marge d'erreurs près, dans un même intervalle temporel que ledit élément, le long d'une échelle de temps, t, associée à chacun des résultats.
Chaque résultat a un début et une fin; les différents éléments du résultat sont répartis entre ce début et cette fin. Un élément représente une information d'un résultat délimitée par deux temps différents le long d'une échelle de temps, t, associée audit résultat. De préférence, ladite marge d'erreur près signifie que le début et la fin de l'élément dans les différents résultats sont les même à 20% près (de manière encore préférée à 10% près), la référence pour calculer le pourcentage étant la valeur du début et ou de la fin d'un élément d'un résultat.

De préférence, ladite règle de sélection de l'étape B. comprend une étape de sélectionner un élément d'un résultat si un intervalle temporel le séparant d'un autre élément directement adjacent et appartenant au même résultat est supérieur ou égal à un intervalle de temps minimum.
Grâce à cette variante préférée, il est possible de rejeter plus efficacement des éléments qui ne sont pas générés par un être humain mais plutôt par une machine par exemple et qui sont temporellement très rapprochés. L'autre élément directement adjacent peut être situé vers la fin ou vers le début dudit résultat par rapport à l'élément auquel est appliquée la règle de sélection.

De préférence, ladite règle de sélection de l'étape B. comprend une étape de sélectionner un élément d'un résultat si un intervalle temporel le séparant d'un autre élément directement adjacent et appartenant au même résultat est inférieur ou égal à un intervalle de temps maximum. Grâce à cette variante, il est possible de rejeter plus efficacement des éléments qui sont temporellement grandement séparés l'un de l'autre. L'autre élément directement adjacent peut être situé vers la fin ou vers le début dudit résultat par rapport à l'élément auquel est appliquée la règle de sélection.

De préférence, ladite règle de sélection de l'étape B. comprend une étape de sélectionner, pour un orateur donné, un élément d'un résultat, si une statistique associée à cet élément de ce résultat est conforme, dans un intervalle près, à une statistique préétablie pour un même élément et pour cet orateur donné. La statistique associée audit élément est typiquement fournie par un moteur de reconnaissance vocale. Des exemples de statistique associée à un élément sont : la durée de l'élément, son taux de confiance. D'autres exemples sont possibles. Il est possible d'enregistrer de telles statistiques pour différents éléments et pour différents orateurs (ou opérateurs), par exemple lors d'une étape préliminaire d'enrôlement. Si l'on connaît ensuite l'identité de l'orateur ayant enregistré un message auquel correspond un résultat fourni par un moteur de reconnaissance vocale, il est possible de comparer des statistiques associées aux différents éléments dudit résultat avec des statistiques préétablies pour ces éléments et pour cet orateur. Dans ce cas, la méthode de l'invention comprend donc de préférence une étape supplémentaire permettant de déterminer l'identité de l'orateur.
Grâce à ce mode de réalisation préféré, la fiabilité et l'efficacité est encore accrue car il est possible de tenir compte de spécificités vocales de l'orateur. En particulier, selon ce mode de réalisation préférée, les inventeurs ne proposent pas d'utiliser une valeur seuil commune à tous les orateurs et à tous les éléments, pour sélectionner un élément à l'étape B. Les inventeurs proposent plutôt d'utiliser le profil de l'orateur. Il se peut en effet, que pour certains éléments et pour un orateur donné, les taux de confiance associés à ces éléments soient généralement faibles, alors que les éléments sont valides et devraient donc être sélectionnés à l'étape B. Cela pourrait notamment arriver si l'accent de l'orateur est particulièrement marqué pour certains éléments, de sorte que leur prononciation par l'orateur s'éloigne alors fortement du dictionnaire phonétique du moteur de reconnaissance vocale qui fournit des taux de confiance faibles pour ces éléments. Utiliser un taux de confiance absolu, commun pour tous les orateurs et pour tous les éléments ne fournit pas de bons résultats dans ce cas.

De préférence, ledit intervalle près du mode de réalisation préféré du paragraphe précédent est compris entre - 20% et + 20% par rapport à la statistique (sa valeur) prédéterminée ou préétablie. Ainsi, dans ce cas préféré, on déduira qu'un élément est valide si : (valeur de la statistique de l'élément) = (valeur préétablie de la statistique pour un même élément) +/- 20%. En particulier, si la statistique préétablie vaut 100 ms (cas où la statistique correspondant à une durée), on déduira qu'un élément est valide si sa durée est comprise entre 80 et 120 ms. De manière encore préférée, ledit intervalle près est compris entre - 10% et + 10% par rapport à la statistique prédéterminée. De manière encore plus préférée, ledit intervalle près est compris entre - 5% et +5% par rapport à la statistique prédéterminée.

La règle de sélection de l'étape B. peut comprendre une étape de sélectionner, pour un orateur donné, un élément d'un résultat, si plusieurs statistiques associées à cet élément de résultat sont conformes, dans un (ou plusieurs) intervalle(s) près, à plusieurs statistiques préétablies (ou prédéterminées) pour un même élément et pour cet orateur donné. On peut par exemple conclure qu'un élément doit être sélectionné si toutes les statistiques associées correspondent, dans un intervalle près, aux statistiques prédéterminées. Une statistique associée à un élément d'un résultat est fournies par exemple par un moteur de reconnaissance vocale.

De préférence, un élément d'un résultat, ayant une statistique la plus conforme (la plus proche) à celle prédéterminée pour un même élément, sera choisi si plusieurs éléments de plusieurs résultats sont a priori conformes.

On peut obtenir pour un orateur une (ou plusieurs) statistique préétablie de différentes manières. Par exemple, on peut imaginer avoir une étape préliminaire d'enregistrement d'un message de calibration par l'orateur. De préférence, ce message comprend une pluralité d'éléments (mots par exemple) que ledit orateur doit dire. Pour le contenu du message, on choisira de préférence un contenu comprenant des éléments que ledit orateur est censé dire plus tard, lors d'opérations de manutentions par exemple. Lors de cette étape préliminaire, on enregistre alors une ou plusieurs statistiques associées à chacun de ladite pluralité d'éléments, ces valeurs pouvant être fournies par un moteur de reconnaissance vocale devant retranscrire le message de calibration. On s'assure au préalable que les éléments du résultat de reconnaissance vocale (qui est issu du message de calibration), pour lesquels on enregistre le ou les valeurs d'un ou plusieurs paramètres, correspondent aux 'vrais' éléments du message de calibration dit par l'orateur. Si c'est le cas, on enregistre par exemple la durée de chacun des éléments du résultat issu du message de calibration dit par l'orateur. Selon un autre exemple, on enregistre un taux de confiance associé à chaque élément du résultat issu du message de calibration. Les valeurs de tels paramètres, durée et taux de confiance, peuvent être fournies par un moteur de reconnaissance vocale. Grâce à cette étape préliminaire, il est possible de fournir facilement les statistiques préétablies.

Une identité d'un orateur peut être déterminée de différentes manières. Selon une première variante possible, elle est déterminée à partir d'une ouverture de session de l'orateur auquel on demande d'entrer son nom dans un système informatique. Selon une autre variante possible, un moteur de reconnaissance vocale dont est issu ledit résultat est apte à reconnaître l'identité dudit orateur disant un message. D'autres variantes sont possibles.

De préférence, différentes étapes telles que décrites ci-dessus sont utilisées en combinaison pour la règle de sélection de l'étape B. En particulier, on pourrait imaginer sélectionner un élément d'un résultat de reconnaissance vocale si sa durée est supérieure ou égale à un seuil de durée inférieur et si une autre statistique (par exemple son taux de confiance) est conforme, dans un intervalle près et pour un même orateur, à la même statistique prédéterminée pour le même élément. D'autres combinaisons sont possibles pour la règle de sélection de l'étape B.

Selon un deuxième aspect, les inventeurs proposent un système pour générer une solution optimisée en reconnaissance vocale et comprenant:
- des moyens d'acquisition pour recevoir une pluralité de résultats de reconnaissance vocale, chacun comprenant un ou plusieurs éléments et chacun étant une transcription d'un message dit par un orateur ;
- des moyens de traitement pour :
   ∘ sélectionner, à l'aide d'une règle de sélection, un ou plusieurs éléments d'un ou plusieurs résultats de ladite pluralité de résultats de reconnaissance vocale ;
   ∘ générer ladite solution optimisée à partir de l'au moins un élément sélectionné.
Les avantages associés à la méthode selon le premier aspect de l'invention, s'appliquent au système de l'invention, mutatis mutandis. Ainsi, en particulier, il est possible d'avoir une solution plus fiable et plus efficace avec le système de l'invention car les éléments de ladite solution ont plus de chance d'être valides ou corrects. Les différents modes de réalisation présentés pour la méthode selon le premier aspect de l'invention, s'appliquent au système de l'invention, mutatis mutandis.

Selon un troisième aspect, l'invention se rapporte à un programme (de préférence, un programme d'ordinateur) pour permettre de générer une solution optimisée en reconnaissance vocale et comprenant un code pour permettre à un dispositif d'effectuer les étapes suivantes :
A. recevoir (de préférence lire) une pluralité de résultats de reconnaissance vocale, chacun comprenant un ou plusieurs éléments et chacun étant une transcription d'un message dit par un orateur ;
B. sélectionner un ou plusieurs éléments appartenant à un ou plusieurs résultats de ladite pluralité de résultats de reconnaissance vocale de l'étape A. en utilisant une règle de sélection;
C. générer ladite solution optimisée à partir de l'au moins un élément sélectionné à l'étape B..

Les avantages associés à la méthode et au système selon les premier et deuxième aspects de l'invention, s'appliquent au programme de l'invention, mutatis mutandis. Ainsi, en particulier, il est possible d'avoir une solution plus fiable et plus efficace avec le système de l'invention, car les éléments de ladite solution ont plus de chance d'être valides ou corrects. Les différents modes de réalisation présentés pour la méthode et le système selon les premier et deuxième aspects de l'invention, s'appliquent au programme de l'invention, mutatis mutandis.

Selon un quatrième aspect, l'invention se rapporte à un support de stockage pouvant être connecté à un dispositif et comprenant des instructions, qui lues, permettent d'imposer audit dispositif d'effectuer les étapes suivantes :
A. recevoir (de préférence lire) une pluralité de résultats de reconnaissance vocale, chacun comprenant un ou plusieurs éléments et chacun étant une transcription d'un message dit par un orateur ;
B. sélectionner un ou plusieurs éléments appartenant à un ou plusieurs résultats de ladite pluralité de résultats de reconnaissance vocale de l'étape A. en utilisant une règle de sélection;
C. générer ladite solution optimisée à partir de l'au moins un élément sélectionné à l'étape B..
Les avantages associés à la méthode, au système et au programme selon les premier, deuxième et troisième aspects de l'invention, s'appliquent au support de stockage de l'invention, mutatis mutandis. Ainsi, en particulier, il est possible d'avoir une solution plus fiable et plus efficace avec le support de stockage de l'invention, car les éléments de ladite solution ont plus de chance d'être valides ou corrects. Les différents modes de réalisation présentés pour la méthode, le système et le programme selon les premier, deuxième et troisième aspects de l'invention, s'appliquent au support de stockage de l'invention, mutatis mutandis. De préférence, ledit dispositif est un moteur de reconnaissance vocale ou un ordinateur pouvant communiquer avec un moteur de reconnaissance vocale.

### Brève description des figures

Ces aspects ainsi que d'autres aspects de l'invention seront clarifiés dans la description détaillée de modes de réalisation particuliers de l'invention, référence étant faite aux dessins des figures, dans lesquelles :
- la Fig.1: montre schématiquement un orateur disant une message qui est traité par un moteur de reconnaissance vocale ;
- la Fig.2: montre schématiquement un exemple de résultat issu d'un moteur de reconnaissance vocale;
- la Fig.3: montre trois résultats de reconnaissance vocale ;
- la Fig.4: montre schématiquement un exemple de système selon l'invention.
Les dessins des figures ne sont pas à l'échelle. Généralement, des éléments semblables sont dénotés par des références semblables dans les figures. La présence de numéros de référence aux dessins ne peut être considérée comme limitative, y compris lorsque ces numéros sont indiqués dans les revendications.

### Description détaillée de modes de réalisation particuliers

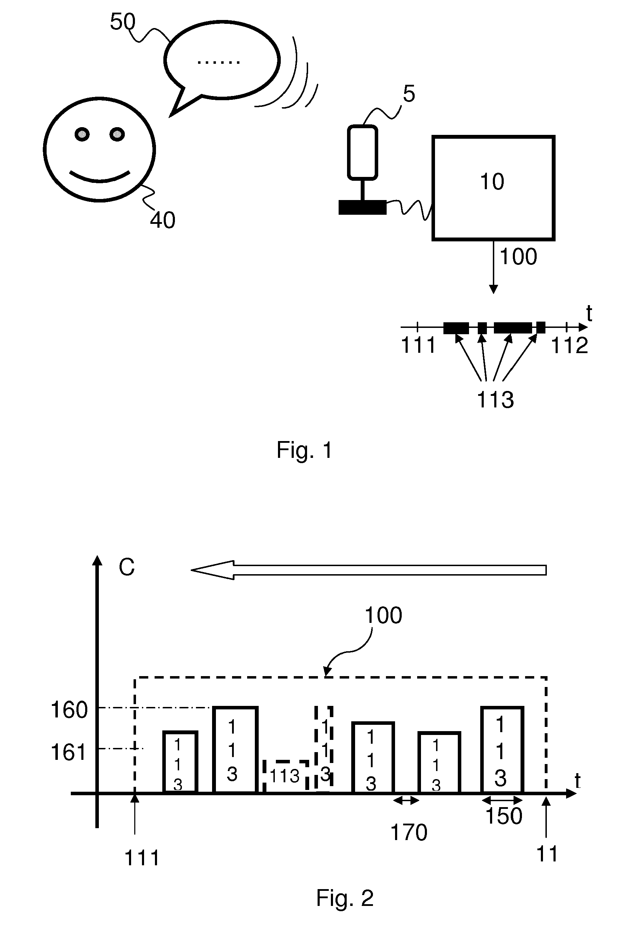

La figure 1 montre un orateur 40 (ou utilisateur 40) disant un message 50 vers un micro 5. Ce message 50 est ensuite transféré vers un moteur de reconnaissance vocale 10 qui est connu d'un homme du métier. Différents modèles et différentes marques sont disponibles sur le marché. En général, le micro 5 fait partie du moteur de reconnaissance vocale 10. Ce dernier traite le message 50 avec des algorithmes de reconnaissance vocale, basés par exemple sur un modèle de Markov caché (MMC). Il en résultat un résultat 100 issu du moteur de reconnaissance vocale 10. Un exemple de résultat 100 est une hypothèse générée par le moteur de reconnaissance vocale 10. Un autre exemple de résultat 100 est une solution obtenue à partir des algorithmes de reconnaissance vocale et à partir d'opérations de post-traitement qui sont par exemple appliquées à une ou plusieurs hypothèses générées par le moteur de reconnaissance vocale 10. Des modules de post-traitement pour fournir une telle solution peuvent faire partie du moteur de reconnaissance vocale 10. Le résultat 100 est généralement sous la forme d'un texte qui peut être déchiffré par une machine, un ordinateur ou une unité de traitement par exemple. Un résultat 100 de reconnaissance vocale peut donc être vu comme une solution d'un message 50 parlé, dit par un orateur 40.

La figure 2 montre un exemple de résultat 100. Il comprend un début 111 et une fin 112. Le début 111 est antérieur à ladite fin 112 le long d'une échelle de temps, t. Le résultat 100 comprend généralement une pluralité d'éléments 113 temporellement répartis entre le début 111 et la fin 112. Un élément 113 représente une information comprise entre deux temps différents le long de l'échelle de temps, t. En général, un élément 113 est une portion du résultat 100 qui n'est pas considérée comme un silence et/ou un bruit de fond. Un exemple d'élément 113 est un mot. En général, les différents éléments 113 sont séparés par des portions du résultat 100 représentant un silence, un bruit de fond, ou un intervalle de temps pendant lequel aucun élément 113 (mot par exemple) n'est reconnu par le moteur de reconnaissance vocale 10.

Le message 50 comprend un certains nombre d'éléments parlés, par exemple des mots parlés tels que : un, deux, voiture, parapluie. Un résultat 100 de reconnaissance vocale comprend un certain nombre d'éléments 113 (ou mots). Ces éléments 113 sont transcrits, par un moteur de reconnaissance vocale 10 à partir du message 50 comprenant les éléments parlés, généralement dans un format lisible par un humain ou un ordinateur par exemple. Si le message 50 comprend les éléments parlés suivants : un, deux, voiture, parapluie, le résultat 100 de reconnaissance vocale comprend idéalement les éléments 113 suivants : un, deux, voiture, parapluie.

Entre son début 111 et sa fin 112, le résultat 100 comprend plusieurs éléments 113, sept dans le cas illustré à la figure 2. Sur cette figure, les éléments 113 sont représentés en fonction du temps, t (abscisse). L'ordonnée, C, représente un niveau ou taux de confiance. Cette notion est connue d'un homme du métier. Il s'agit d'une propriété ou statistique généralement associée à chaque élément 113 et qui peut être fournie par un moteur de reconnaissance vocale 10 en général. Un taux de confiance représente, en général, une probabilité qu'un élément écrit, déterminé par un moteur de reconnaissance vocale 10 à partir d'un élément parlé, est le bon. Un exemple de moteur de reconnaissance vocale 10 est le modèle VoCon® 3200 V3.14 de Nuance. Dans ce cas, le taux de confiance varie entre 0 et 10 000. Une valeur de 0 se rapporte à une valeur minimale d'un taux de confiance (très faible probabilité que l'élément 113 du résultat 100 de reconnaissance vocale soit le bon) et 10 0000 représente une valeur maximale d'un taux de confiance (très grande probabilité que l'élément 113 du résultat 100 de reconnaissance vocale soit le bon). En fonction de la hauteur d'un élément 113 sur la figure 2, son taux de confiance 160 est plus ou moins élevé.

La méthode de l'invention permet de générer une solution optimisée 105 en reconnaissance vocale. La première étape, l'étape A., consiste à recevoir (de préférence, lire), une pluralité de résultats 100 de reconnaissance vocale. De préférence, l'étape A. consiste à recevoir trois, quatre, ou cinq résultats 100 de reconnaissance vocale. De préférence, ces résultats 100 de reconnaissance vocale sont des hypothèses fournies par un moteur de reconnaissance vocale 10. Ensuite, l'étape B. consiste à sélectionner un ou plusieurs éléments 113 d'un ou plusieurs résultats 100, en utilisant une règle de sélection. Cette règle de sélection peut par exemple conduire à sélectionner un élément 113 d'un résultat 100. Selon un autre exemple, la règle de sélection conduit à sélectionner plusieurs éléments 113 d'un seul résultat 100. Selon encore un autre exemple, la règle de sélection conduit à sélectionner plusieurs éléments 113 parmi plusieurs résultats 100. Dans ce cas, il est possible que chaque élément 113 sélectionné appartienne à un résultat 100 différent ou que plusieurs éléments 113 sélectionnés appartiennent à un même résultat 100. Si la règle de sélection conduit à sélectionner deux éléments 113, un exemple possible de sélection est de sélectionner un élément 113 d'un résultat 100 et un autre élément 113 d'un autre résultat 100. A partir de l'au moins un élément 113 sélectionné à l'étape B., une solution optimisée 105 est générée à l'étape C..

En général, un moteur de reconnaissance vocale 10 fournit, pour chaque résultat 100 qu'il génère, un score de confiance. Dans ce cas, la méthode de l'invention comprend de préférence une étape préliminaire de sélectionner un ou plusieurs résultats 100 fournis par un moteur de reconnaissance vocale 10 qui a un score de confiance supérieur ou égal à un score de confiance minimum. Pour ce mode de réalisation préféré, la solution optimisée 105 est donc générée à partir de résultats 100 qui ont passé un premier filtre et qui ne sont retenus que si le score de confiance (global) qui leur est associé est jugé suffisant. De préférence, le score de confiance minimum vaut 5000 De manière encore préférée, le score de confiance minimum vaut 6000 (valeurs préférées pour le modèle VoCon® 3200 V3.14 de Nuance mais qui peuvent être adaptées à d'autres modèles de moteurs de reconnaissance vocale 10). D'autres valeurs préférées sont néanmoins possibles.

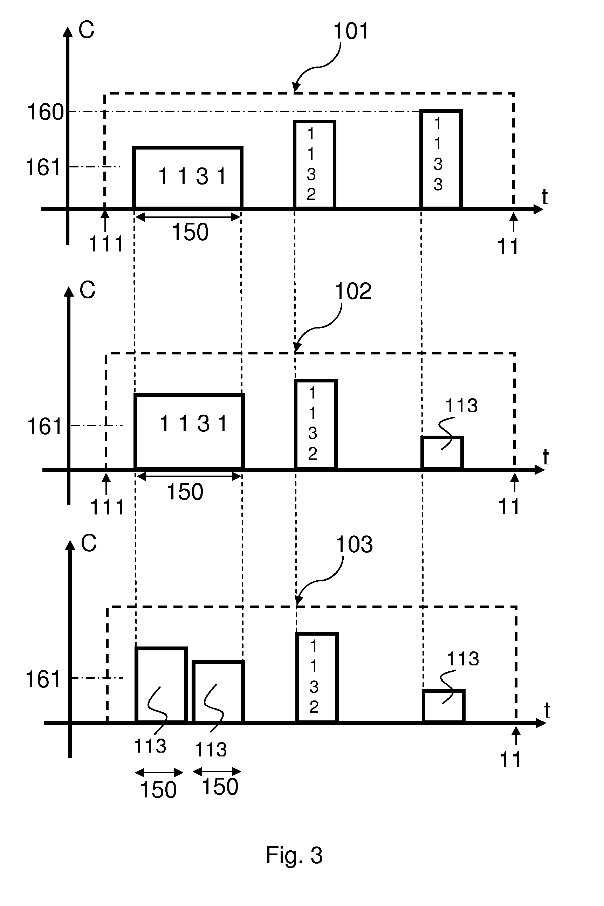

La règle de sélection de l'étape B peut comprendre différentes étapes. La figure 3 montre un exemple de trois résultats 100 de reconnaissance vocale : un premier 101, un deuxième 102 et un troisième 103 résultat. Le premier résultat 101 comprend un premier 1131, un deuxième 1132 et un troisième 1133 éléments. Le deuxième résultat 102 comprend un premier 1131, un deuxième 1132 et un troisième 1133 éléments. Le troisième résultat 103 comprend deux premiers 1131, un deuxième 1132 et un troisième 1133 éléments. Comme cela est illustré à la figure 3, les différents éléments 113 des trois résultats (101, 102, 103) ont, de préférence, les mêmes débuts et fins, sauf pour ce qui est des deux premiers éléments 1131 du troisième résultat 103. Imaginons que les éléments 113 des différents résultats (101, 102, 103) soient les mots mentionnés dans la table ci-dessous.

| | **1131** | | **1132** | **1133** |
|---|---|---|---|---|
| **101** | sept | | quatre | trois |
| **102** | six | | quatre | deux |
| **103** | six | sept | quatre | deux |
| **105** | six | sept | quatre | trois |

Les mots soulignés sont les éléments sélectionnés par la règle de sélection de l'étape B. Selon cet exemple, les premiers éléments 1131 des premier 101 et deuxième 102 résultats (sept et six) ne sont pas retenus car leur durée 150 est supérieure à un seuil de durée supérieur. Par contre, les premiers éléments 1131 du troisième résultat 103 (six et sept) sont sélectionnés car leur durée 150 est inférieure à un seuil de durée supérieur. Le deuxième élément 1132 des premier 101, deuxième 102 et troisième 103 résultat est identique. Il est donc sélectionné. Le troisième élément 1133 du premier résultat 101 est sélectionné car son taux de confiance 160 est supérieur à un taux de confiance minimal 161. Au final, les éléments 113 de la solution optimisée 105 sont ceux de la table ci-dessus. Selon cet exemple, la règle de sélection comprend donc trois types de critères différents : un basé sur la durée 150 des éléments 113, un basé sur la redondance d'un élément 113 et un troisième basé sur le taux de confiance 160 associé à un élément 113. D'autres types de critères peuvent être utilisés.

De préférence, on compare une ou plusieurs statistiques associées à chaque élément 113 de chaque résultat 100 à de telles statistiques qui sont prédéterminées ou préétablies pour l'orateur 40 qui a dicté le ou les messages 50 dont sont issus les résultats 100 et qui sont aussi préétablies pour certains éléments 113. Par exemple, on reprenant le cas illustré à la figure 3, plutôt que d'utiliser une valeur absolue d'un seuil de durée supérieur pour la durée d'un élément 113, on peut utiliser un seuil de durée supérieur qui dépend de l'orateur 40 et de l'élément 113 considéré. Par exemple, pour un orateur X, on peut avoir préétabli qu'il dit le mot 'deux' généralement en 300 ms et qu'il dit le mot sept en 350 ms. Si le moteur de reconnaissance vocale 10 fournit alors un mot 'deux' d'une durée de 600 ms, on pourra avoir des doutes sérieux quant à sa validité.

Une statistique prédéterminée peut être obtenue grâce à une étape préliminaire par exemple, lors de laquelle un orateur 40 dit un message 50 de calibration à un moteur de reconnaissance vocale 10, ledit message 50 de calibration comprenant de préférence différents mots. Grâce au résultat 100 de ce message 50 de calibration fourni par le moteur de reconnaissance vocale 10, il est possible de déduire une ou plusieurs statistiques associées aux différents éléments.

Cette version préférée de la règle de sélection de l'étape B. n'empêche pas, selon certaines variantes, d'utiliser en autre certains critères absolus, communs à tous les éléments 113 et/ou à tous les orateurs 40, pour sélectionner un élément 113. Ainsi, on peut par exemple rejeter tout élément 113 du résultat 100 qui a durée supérieure à deux secondes et/ou qui a un taux de confiance 160 inférieur à un taux de confiance minimum 161 absolu, par exemple 3000 (valeur préférée pour le modèle VoCon® 3200 V3.14 de Nuance mais qui peut être adaptée à d'autres modèles de moteurs de reconnaissance vocale 10).

Un exemple de résultat 100 de reconnaissance vocale est une solution d'un message 50 auquel sont appliquées une ou plusieurs opérations de post-traitement. Par exemple, un résultat 100 peut être une hypothèse fournie par un moteur de reconnaissance vocale 10 qui est filtrée, pour ne garder qu'un ou plusieurs éléments 113 jugés valides. Quand les résultats 100 de l'étape A. sont obtenus à partir d'opération de filtrage, on applique de préférence une telle opération de filtrage de la fin vers le début de chaque hypothèse, de préférence, en ne retenant que les éléments de chaque hypothèse qui sont valides consécutifs. Cela permet d'avoir une opération de filtrage plus efficace et plus fiable. La figure 2 illustre le principe d'une opération de filtrage appliquée à un résultat 100, de la fin vers le début, comme le montre la flèche en haut de la figure. Les éléments 113 en traits pleins sont considérés comme valides. Les éléments 113 en traits discontinus sont considérés comme non valides.

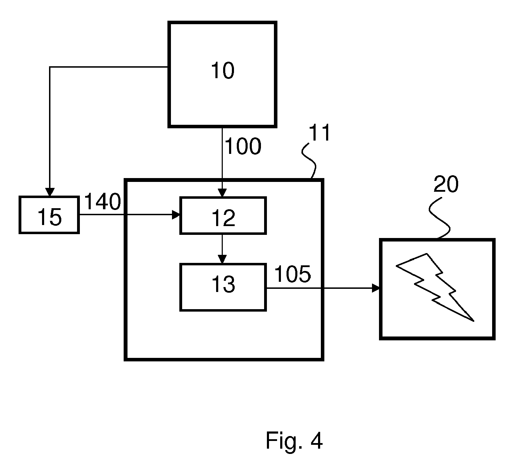

Selon un deuxième aspect, l'invention se rapporte à un système 11 (ou dispositif) pour déterminer une solution optimisée 105. La figure 4 illustre schématiquement un tel système 11 en combinaison avec un moteur de reconnaissance vocale 10, un écran 20 et un dispositif auxiliaire 15. Sur cette figure, le système 11 et le moteur de reconnaissance vocale 10 sont deux dispositifs séparés. Selon une autre version possible, le système 11 est intégré dans un moteur de reconnaissance vocale 10 de sorte qu'il ne soit pas possible de les différencier. Dans un tel cas, un moteur de reconnaissance vocale 10 classique est modifié ou adapté pour pouvoir réaliser les fonctions du système 11 décrites ci-dessous. Le dispositif auxiliaire 15 permet de fournir une ou plusieurs statistiques préétablies 140 pour un ou plusieurs éléments 113 et pour un ou plusieurs orateurs 40. A la figure 4, ce dispositif auxiliaire 15 est séparé du système 11. Selon une autre version possible, le dispositif auxiliaire est un module qui est intégré au niveau du système 11 de sorte qu'il ne soit pas possible de les différencier. Il pourrait être également prévu que le module auxiliaire 15 soit intégré au niveau du moteur de reconnaissance vocale 10. De préférence, le module auxiliaire 15 est apte à communiquer avec le moteur de reconnaissance vocale 10. Le module auxiliaire 15 est par exemple un module mémoire.

Des exemples de système 11 sont : un ordinateur, un moteur de reconnaissance vocale 10 adapté ou programmé pour pouvoir réaliser une méthode selon le premier aspect de l'invention, un module matériel (ou hardware) d'un moteur de reconnaissance vocale 10, un module matériel apte à communiquer avec un moteur de reconnaissance vocale 10. D'autres exemples sont néanmoins possibles. Le système 11 comprend des moyens d'acquisition 12 pour recevoir (de préférence lire) une pluralité de résultats 100 de reconnaissance vocale. De préférence, ces moyens d'acquisition 12 sont également aptes à recevoir (de préférence lire) une ou plusieurs statistiques 140 préétablies. Des exemples de moyens d'acquisition 12 sont: un port d'entrée du système de post-traitement 11, par exemple un port USB, un port Ethernet, un port sans fil (par exemple WIFI). D'autres exemples de moyens d'acquisition 12 sont néanmoins possibles.

Le système 11 comprend en outre des moyens de traitement 13 pour sélectionner, à l'aide d'une règle de sélection, un ou plusieurs éléments 113 d'un ou plusieurs résultats 100 et générer une solution optimisée 105 à partir de l'au moins un élément 113 sélectionné. La règle de sélection peut comprendre différentes étapes de sélection comme cela a été présenté ci-dessus pour la méthode selon le premier aspect de l'invention. De préférence, le système 11 est apte à envoyer une solution optimisée 105 vers un écran 20 pour l'afficher.

Des exemples de moyens de traitement 13 sont: une unité de contrôle, un processeur ou unité centrale de traitement, un contrôleur, une puce, une micro-puce, un circuit intégré, un processeur multi-coeurs. D'autres exemples connus d'un homme du métier sont néanmoins possibles.

De préférence, le système 11 est également apte à réaliser une méthode de post-traitement de filtrage d'un résultat 100 de reconnaissance vocale. Dans ce cas, les moyens de traitement 13 sont de préférence aptes à lui appliquer une telle méthode de post-traitement de filtrage.

Selon un troisième aspect, l'invention se rapporte à un programme, de préférence un programme d'ordinateur. De préférence, ce programme fait partie d'une interface vocale homme-machine.

Selon un quatrième aspect, l'invention se rapporte à un support de stockage pouvant être connecté à un dispositif, par exemple un ordinateur pouvant communiquer avec un moteur de reconnaissance vocale 10. Selon une autre variante possible, ce dispositif est un moteur de reconnaissance vocale 10. Des exemples de support de stockage selon l'invention sont : une clé USB, un disque dur externe, un disque de type CD-ROM. D'autres exemples sont néanmoins possibles.

La présente invention a été décrite en relation avec des modes de réalisations spécifiques, qui ont une valeur purement illustrative et ne doivent pas être considérés comme limitatifs. D'une manière générale, la présente invention n'est pas limitée aux exemples illustrés et/ou décrits ci-dessus. L'usage des verbes « comprendre », « inclure », « comporter », ou toute autre variante, ainsi que leurs conjugaisons, ne peut en aucune façon exclure la présence d'éléments autres que ceux mentionnés. L'usage de l'article indéfini « un », « une », ou de l'article défini « le », « la » ou « l' », pour introduire un élément n'exclut pas la présence d'une pluralité de ces éléments. Les numéros de référence dans les revendications ne limitent pas leur portée.

En résumé, l'invention peut également être décrite comme suit. Méthode pour générer une solution optimisée 105 en reconnaissance vocale et comprenant les étapes suivantes : recevoir une pluralité de résultats 100 de reconnaissance vocale, chacun comprenant un ou plusieurs éléments 113 et chacun étant une solution d'un message 50 dit par un orateur 40; sélectionner, en utilisant une règle de sélection, un ou plusieurs éléments 113 d'un ou plusieurs résultats 100 de ladite pluralité de résultats 100 de reconnaissance vocale; générer ladite solution optimisée 105 à partir de l'au moins un élément 113 sélectionné.

## Revendications

1. Méthode pour générer une solution optimisée (105) en reconnaissance vocale et comprenant les étapes suivantes :
A. recevoir une pluralité de résultats (100) de reconnaissance vocale, chacun comprenant un ou plusieurs éléments (113) et chacun étant une solution d'un message (50) dit par un orateur (40) ;
B. sélectionner un ou plusieurs éléments (113) appartenant à un ou plusieurs résultats (100) de ladite pluralité de résultats (100) de reconnaissance vocale de l'étape A. en utilisant une règle de sélection;
C. générer ladite solution optimisée (105) à partir de l'au moins un élément (113) sélectionné à l'étape B..

2. Méthode selon la revendication précédente **caractérisée en ce que** les éléments (113) desdits résultats (100) de reconnaissance vocale de l'étape A. appartiennent à un même vocabulaire.

3. Méthode selon l'une quelconque des revendications précédentes **caractérisée en ce que** les résultats (100) de reconnaissance vocale de l'étape A. sont chacun une solution d'un même message (50) dit par ledit orateur (40).

4. Méthode selon l'une quelconque des revendications précédentes **caractérisée en ce que** chaque résultat (100) de ladite pluralité de résultats (100) de reconnaissance vocale de l'étape A. est **caractérisé par** un score de confiance supérieur ou égal à un score de confiance minimum.

5. Méthode selon l'une quelconque des revendications précédentes **caractérisée en ce que** ladite règle de sélection de l'étape B. comprend une étape de sélectionner un élément (113) s'il est identique à au moins deux résultats (100) de ladite pluralité de résultats (100) de l'étape A. et s'il est compris, dans une marge d'erreurs près, dans un même intervalle temporel, le long d'une échelle de temps, t, associée à chacun desdits deux résultats (100).

6. Méthode selon l'une quelconque des revendications précédentes **caractérisée en ce que** ladite règle de sélection de l'étape B. comprend une étape de sélectionner un élément (113) si sa durée est supérieure ou égale à un seuil de durée inférieur.

7. Méthode selon l'une quelconque des revendications précédentes **caractérisée en ce que** ladite règle de sélection de l'étape B. comprend une étape de sélectionner un élément (113) si sa durée est inférieure ou égale à un seuil de durée supérieur.

8. Méthode selon l'une quelconque des revendications précédentes **caractérisée en ce que** chaque élément (113) desdits résultats (100) de l'étape A. est **caractérisé par** un taux de confiance (160) et en ce que ladite règle de sélection de l'étape B. comprend une étape de sélectionner un élément (113) si son taux de confiance (160) est supérieur ou égal à un taux de confiance minimal (161).

9. Méthode selon l'une quelconque des revendications précédentes **caractérisée en ce que** :
- chaque élément (113) desdits résultats (100) de l'étape A. est **caractérisé par** un taux de confiance (160), et en ce que
- ladite règle de sélection de l'étape B. comprend une étape de sélectionner un élément (113) d'un résultat (100) si son taux de confiance (160) est supérieur ou égal au taux de confiance (160) d'un ou plusieurs autres éléments (113) d'un ou plusieurs autres résultats (100) et compris, dans une marge d'erreurs près, dans un même intervalle temporel que ledit élément (113), le long d'une échelle de temps, t, associée à chacun des résultats (100).

10. Méthode selon l'une quelconque des revendications précédentes **caractérisée en ce que** ladite règle de sélection de l'étape B. comprend une étape de sélectionner un élément (113) d'un résultat (100) si un intervalle temporel (170) le séparant d'un autre élément (113) directement adjacent et appartenant au même résultat (100) est supérieur ou égal à un intervalle de temps minimum.

11. Méthode selon l'une quelconque des revendications précédentes **caractérisée en ce que** ladite règle de sélection de l'étape B. comprend une étape de sélectionner un élément (113) d'un résultat (100) si un intervalle temporel (170) le séparant d'un autre élément (113) directement adjacent et appartenant au même résultat (100) est inférieur ou égal à un intervalle de temps maximum.

12. Méthode selon l'une quelconque des revendications précédentes **caractérisée en ce que** ladite règle de sélection de l'étape B. comprend une étape de sélectionner, pour un orateur donné (40), un élément (113) d'un résultat (100), si une statistique associée à cet élément (113) de ce résultat (100) est conforme, dans un intervalle près, à une statistique préétablie pour un même élément (113) et pour cet orateur donné (40).

13. Système (11) pour générer une solution optimisée (105) en reconnaissance vocale et comprenant :
- des moyens d'acquisition (12) pour recevoir une pluralité de résultats (100) de reconnaissance vocale, chacun comprenant un ou plusieurs éléments (113) et chacun étant une transcription d'un message (50) dit par un orateur (40) ;
- des moyens de traitement (13) pour :
∘ sélectionner, à l'aide d'une règle de sélection, un ou plusieurs éléments (113) d'un ou plusieurs résultats (100) de ladite pluralité de résultats (100) de reconnaissance vocale ;
∘ générer ladite solution optimisée (105) à partir de l'au moins un élément (113) sélectionné.

14. Programme pour permettre de générer une solution optimisée (105) en reconnaissance vocale et comprenant un code pour permettre à un dispositif d'effectuer les étapes suivantes :
A. recevoir une pluralité de résultats (100) de reconnaissance vocale, chacun comprenant un ou plusieurs éléments (113) et chacun étant une transcription d'un message (50) dit par un orateur (40) ;
B. sélectionner un ou plusieurs éléments (113) appartenant à un ou plusieurs résultats (100) de ladite pluralité de résultats (100) de reconnaissance vocale de l'étape A. en utilisant une règle de sélection;
C. générer ladite solution optimisée (105) à partir de l'au moins un élément (113) sélectionné à l'étape B..

15. Support de stockage pouvant être connecté à un dispositif et comprenant des instructions, qui lues, permettent audit dispositif de générer une solution optimisée (105) en reconnaissance vocale, lesdites instructions permettant d'imposer audit dispositif d'effectuer les étapes suivantes :
A. recevoir une pluralité de résultats (100) de reconnaissance vocale, chacun comprenant un ou plusieurs éléments (113) et chacun étant une transcription d'un message (50) dit par un orateur (40) ;
B. sélectionner un ou plusieurs éléments (113) appartenant à un ou plusieurs résultats (100) de ladite pluralité de résultats (100) de reconnaissance vocale de l'étape A. en utilisant une règle de sélection;
C. générer ladite solution optimisée (105) à partir de l'au moins un élément (113) sélectionné à l'étape B..
